Europäisches Patentamt

**European Patent Office**

**Office européen des brevets**

(11) Publication number: **0 046 089**

**A1**

(12) # EUROPEAN PATENT APPLICATION

(21) Application number: **81303661.3**

(22) Date of filing: **11.08.81**

(51) Int. Cl.³: **A 01 K 95/00**

(30) Priority: **13.08.80 ZA 804938**
**02.12.80 ZA 807511**

(43) Date of publication of application:
**17.02.82 Bulletin 82/7**

(84) Designated Contracting States:
**AT DE FR GB IT**

(71) Applicant: **Jonck, Johannes Jonathan**
**377 Fairy Glen Road Lynnwoodpark**
**Pretoria Transvaal(ZA)**

(72) Inventor: **Jonck, Johannes Jonathan**
**377 Fairy Glen Road Lynnwoodpark**
**Pretoria Transvaal(ZA)**

(74) Representative: **Brown, John David et al,**
**FORRESTER & BOEHMERT Widenmayerstrasse 41**
**D-8000 München 22(DE)**

(54) **An angling aid.**

(57) An angling aid consists of a ring 10 of rigid plastics, formed with a diametral bore 12 and a fishing line passage, 13 and a split pin 11 which is a resilient fit in the bore. In use the pin traps a loop on a sinker line 17 in the ring opening. The fishing line passes through the passage, 13 is tied to the head 15 of the split pin and continues on to the hook. If a sinker gets snared, it may be detached from the line simply by relaxing the line so that the fish may pull the pin out of its bore.

FIG_ 2

—1—

## BACKGROUND OF THE INVENTION

THIS invention relates to an angling aid.

When angling with the aid of a sinker it often happens that when a fish has been hooked, the sinker or the sinker line gets entangled with rocks, reeds or other obstructions.  The angler not only has to fight the fish, but also the entanglement often resulting in the loss of the fish with the hook, part of a line and the sinker.

An object of the invention is to provide a device by means of which the fisherman may cause the sinker to be detached from the line.

## SUMMARY OF THE INVENTION

An angling aid for use while angling with a sinker comprises a body formed with a bore, a peg adapted to be resiliently retained in the bore, a line attachment head on the peg, and a line passage through the body along which the line may pass from the head at an acute angle to the long axis of the peg, so that a loop on an auxiliary line may be held captive on the peg by passing the peg into the bore with a fishing line extending from the head to a baited hook and from the head through the passage to a fishing rod.

The loop may simply be engaged over the peg between the head and the body, but there is a risk that the sinker may inadvertently pull the peg out of the body.   In the preferred form of the invention there is a recess intersecting the bore so that the loop may be held captive by passing the peg into the bore and through the loop positioned in the recess.

In one form of the invention the body is an annulus with the opening surrounded by the annulus forming the recess. In this case the bore passes diametrally through one thickness of the annulus and at least ends in an opposed blind bore.

The peg is conveniently a split pin made of stainless steel and the body is made of a rigid plastics.

DESCRIPTION OF THE DRAWINGS

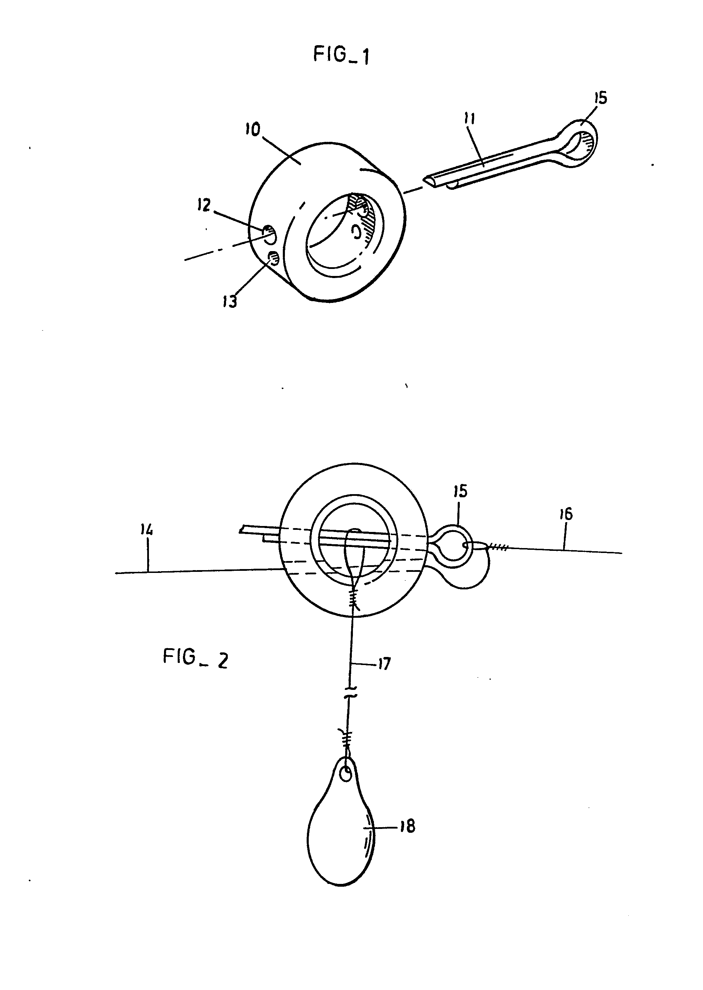

Figure 1 is an exploded view of the angling aid of the invention, and Figure 2 is a view showing the device in use.

DESCRIPTION OF A PREFERRED EMBODIMENT

Figure 1 shows the basic elements of the angling aid of the invention. It comprises a ring 10 made of a suitable rigid plastics and a stainless steel split pin 11.

The ring 10 is formed with a diametral bore 12 in which the split pin 11 is a resilient fit. Almost parallel to the bore 12 is a passage 13 through which a fishing line may pass. It will be seen that the continuation of the passage 13 intersects the continuation of the bore 12 at a sharply acute angle.

In use a fishing line 14 is passed through the passage 13 and tied to the head 15 of the split pin 11. The line 14 continues as the trace 16 for a hook, or a separate trace may be tied to the head 15. Next a loop is connected to or formed at the free end of a sinker line 17 of a sinker 18. The loop is held in the central opening of the ring 10 and the pin 11 inserted to snare the loop.

Angling may now commence and be carried out in the usual way. If a fish is caught and the sinker 18 gets snared on an obstruction the angler has two choices : (a) he may elect to pull the fish and sinker from the water or (b) he may elect to lose the sinker and attempt to pull in the fish. In the latter event he relaxes his pull on the line 14. As the fish tries to pull away, it dislodges the pin 11 from the ring 10 which frees the loop on the sinker line 17.  The fish may now be brought in and the angling aid comprising the ring 10 and the pin 11 with it.  However, the sinker 18 is now lost.

The illustrated device may also be used for kite fishing.  In this case the suspending line from the kite has a loop passing around the pin 11.

CLAIMS:                                                0046089

1.                                            –4–

An angling aid for use while angling with a sinker characterized by a body
formed with a bore, a peg adapted to be resiliently retained in the
bore, a line attachment head on the peg, and a line passage through
the body along which the line may pass from the head at an acute angle
to the long axis of the peg, so that a loop on an auxiliary line may be
held captive on the peg by passing the peg into the bore with a fishing
line extending from the head to a baited hook and from the head through
the passage to a fishing rod.

2.

The angling aid claimed in claim 1 including a recess intersecting the
bore so that the loop may be held captive by passing the peg into the
bore and through the loop positioned in the recess.

3.

The aid claimed in claim 2 in which the body is an annulus with the
opening surrounded by the annulus forming the recess.

4.

The aid claimed in claim 3 in which the bore passes diametrally through
one thickness of the annulus and at least ends in an opposed blind bore.

5.

The aid claimed in any one of the above claims in which the peg is a split
pin.

6.

The aid claimed in claim 5 in which the split pin is made of stainless
steel.

7.
The aid claimed in any one of the above claims in which the body is made
of a rigid plastics.

FIG_1

FIG_2

# EUROPEAN SEARCH REPORT

European Patent Office

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | <u>US - A - 2 844 906</u> (PHILLIPS)<br>* Column 2, line 38 to column 3, line 39; figures 1-3 *<br>-- | 1,2,5 | A 01 K 95/00 |
| X | <u>US - A - 3 641 700</u> (HARRISON)<br>* Column 2, lines 4-43 *<br>-- | 1,2,7 | |
| | <u>US - A - 2 562 054</u> (MATHIEU)<br>* Column 1, line 54 to column 3, line 7; column 3, lines 30-32 *<br>-- | 1,2,5, 6 | TECHNICAL FIELDS SEARCHED (Int. Cl.³) |
| | <u>US - A - 2 488 475</u> (MERRITT)<br>* Column 1, line 43 to column 2, line 23 *<br>------ | 1,2,5 | A 01 K |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 18-11-1981 | CRUCHTEN |

EPO Form 1503.1 06.78